# EUROPEAN PATENT SPECIFICATION

(11) **EP 4 336 164 B1**
(45) Date of publication and mention of the grant of the patent: **15.04.2026**
(21) Application number: 22798811.0
(22) Date of filing: 10.02.2022
(51) Int. Cl.: G01M 13/045, G01H 1/00

(54) **VIBRATION DIAGNOSIS DEVICE**
SCHWINGUNGSDIAGNOSEVORRICHTUNG
DISPOSITIF DE DIAGNOSTIC DE VIBRATIONS

(30) Priority: 07.05.2021 JP 2021079222
(43) Date of publication of application: 13.03.2024
(73) Proprietor: NSK Ltd., Tokyo 141-8560 (JP)
(72) Inventor: MUTOH, Yasushi, Fujisawa-shi, Kanagawa 251-8501 (JP); OHFUJI, Fumiko, Fujisawa-shi, Kanagawa 251-8501 (JP)
(74) Representative: Grünecker Patent- und Rechtsanwälte PartG mbB
(86) International application number: PCT/JP2022/005410
(87) International publication number: WO 2022/234704

(56) References cited:
- EP-A1- 3 605 036
- JP-A- 2018 163 178
- JP-A- 2020 071 040
- JP-A- 2020 071 040

## Description

### TECHNICAL FIELD

The present invention relates to a vibration diagnosis device.

### BACKGROUND ART

One example of vibration diagnosis devices is disclosed in JP 2012-98149A (Patent Literature Document 1). The vibration diagnosis device of JP 2012-98149A includes a plurality of vibration sensors and a vibration diagnosis unit that receives wireless signals transmitted from the vibration sensors and performs state diagnosis (condition diagnosis) of a mechanical facility (machine). The vibration diagnostic device has an A/D converting unit that converts output signals of the vibration sensors into digital signals, a wireless transmitting unit that transmits the signals, which have undergone an A/D converting process, in a wireless manner, and a driving power source for the vibration sensors and the wireless transmitting unit. In addition, information of the measurement targets is recorded (stored) based on the installation locations of the vibration sensors. When analyzing the vibration waveform data, the vibration diagnosing unit determines the vibration state of the mechanical facility by selecting the measurement object (target) based on the installation location of the vibration sensor and using the frequency analysis, the Lissajous analysis, the actual operation analysis, and the coherence function analysis.

JP 2015-114214A (Patent Literature Document 2) discloses a machine component inspection system using an information terminal device. In JP 2015-114214A, data detected by a vibration sensor connected to the information terminal device is wirelessly transmitted from the information terminal device to a server. Then, the result of data processing by the server is wirelessly transmitted to the information terminal device and displayed on the information terminal device. JP 2015-114214A performs threshold determination based on numerical data when inspecting machine components (machine parts). In addition, abnormal parts are displayed based on a rotating speed (number of revolutions) and bearing model number information. Further prior art is disclosed in JP 2020 071040.

### LISTING OF REFERENCES

### Patent Literature Documents

Patent Literature Document 1: JP 2012-98149A
Patent Literature Document 2: JP 2015-114214A

### SUMMARY OF THE INVENTION

### PROBLEMS TO BE SOLVED BY THE INVENTION

However, if the technologies of JP 2012-98149A and JP 2015-114214A are used, the vibration detection result must be wirelessly transmitted to an external analysis device (analysis unit) after detecting the vibration; otherwise, it is not possible to determine the defect of the analysis target (mechanical parts, mechanical equipment). Further, for example, after damage of a bearing is diagnosed, it is not possible to re-analyze or re-diagnose the bearing by changing the bearing identification number, the rotating speed, the pulse frequency caused by (derived from) the defect, and the analysis conditions. Furthermore, since the determination level of the bearing damage analysis cannot be changed, erroneous determination is likely to occur.

Therefore, a purpose of the present invention is to provide a vibration diagnosis device capable of performing accurate vibration analysis more easily and efficiently.

### SOLUTION TO THE PROBLEMS

In order to solve the above-mentioned problems, a vibration diagnosis device according to one aspect of the present invention is directed to a vibration diagnosis device configured to diagnose vibration of a diagnosis target based on an input signal from outside. The vibration diagnosis device includes a vibration sensor configured to detect the vibration of the diagnosis target, a filtering unit configured to extract a waveform in a predetermined frequency band from a signal detected by the vibration sensor, and an arithmetic processing unit configured to perform frequency analysis on the waveform, which is obtained (extracted) by the filtering unit, to generate spectral data. The arithmetic processing unit is configured to calculate at least one basic statistic of vibration obtained from the waveform of the signal detected by the vibration sensor and diagnose (determine) presence or absence of an abnormality in the diagnosis target when the arithmetic processing unit does not generate the spectral data in accordance with the input signal.

The vibration diagnosis device may include a wireless communication unit. The input signal from outside may be a signal sent from an information terminal device having a wireless communication function. The diagnosis target is, for example, a mechanical component.

A diagnostic system according to another aspect of the present invention is a diagnostic system including the above-described vibration diagnosis device and an information terminal device. The information terminal device includes a communication unit configured to transmit and receive a signal to and from the vibration diagnosis device. The information terminal device also includes a diagnostic unit that compares a frequency component included in the spectral data transmitted from the vibration diagnosis device with a damage frequency derived from damage of the diagnosis target, and diagnoses (determines) an abnormality of the diagnosis target. The information terminal device also includes an output unit configured to output a diagnostic result of the diagnostic unit.

When the diagnostic unit diagnoses an abnormality of the diagnosis target, the information terminal device may transmit, to the arithmetic processing unit of the vibration diagnosis device, an input signal for prohibiting the arithmetic processing unit from diagnosing the presence/absence of an abnormality of the diagnosis target.

The information terminal device may include a database that stores a pulse frequency derived from damage of the diagnosis target as a damage frequency converted based on a predetermined rotation speed of the diagnosis target. The damage frequency may be obtained by applying a predetermined calculation process to the pulse frequency in the database using an actual rotation speed of the diagnosis target.

The diagnosis target may be a bearing. The database may store a vibration pulse frequency derived from damage of an inner ring, an outer ring, and rolling elements (balls) of the bearing as a bearing damage frequency converted based on a predetermined rotation speed of the bearing. The pulse frequency may be obtained by applying a calculation process to the damage frequency in the database using an actual rotation speed of the diagnosis target.

The diagnostic unit may be configured to carry out re-diagnosis with a new or different bearing identification number, a new or different rotational speed of a rotating ring (inner ring), and a new or different determination level of bearing failure (bearing damage) based on a FFT spectrum obtained by an envelope process performed by an arithmetic processing unit of the vibration diagnosis device.

The information terminal device may include a storage unit. The FFT spectrum obtained by the envelope process performed by the arithmetic processing unit of the vibration diagnosis device may be stored in the storage unit.

Data, which is obtained by AD converting the vibration signal acquired by the vibration sensor and is stored in the internal memory of the vibration diagnosis device, may be retrieved from the internal memory of the vibration diagnosis device and may be used with the FFT spectrum that has undergone the envelope process in which a filtering process and/or an analyzing process is altered.

The output unit may include at least one of an image display unit and an audio output unit (sound output unit).

The diagnosis system may be configured to diagnose the diagnosis target (bearing) provided in each of a plurality of facilities (machines). The diagnostic system may further include an external terminal device to which management software is installed. The external terminal device may have a communication unit, a display unit and a printing unit. The external terminal device may obtain the signal of the waveform, the spectral data, the diagnostic result of the arithmetic processing unit and the diagnostic result of the diagnostic unit from the information terminal device. The external terminal device may also be configured to manage a trend of change in the vibration over time for each of the facilities. The external terminal device may also be configured to display the spectral data and the signal of the waveform. The external terminal device may also be configured to display the diagnostic result of the diagnostic unit. The external terminal device may also be configured to display the presence/absence of an abnormality determined by diagnosis of the arithmetic processing unit. The external terminal device may also be configured to change the identification number of the bearing, the rotational speed of the rotating ring (inner ring) and the bearing damage diagnosis level (determination level) of the diagnostic unit and cause the diagnostic unit to carry out re-diagnosis with the changed identification number, the changed rotational speed and the changed determination level. The external terminal device may also be configured to set up a route of walk-around check to diagnose the facilities. The external terminal device may also be configured to automatically make a report of the management of the trend of change in the vibration, the display of the waveform signal, the display of the diagnostic result, the display of the presence/absence of the abnormality, the bearing identification number, the rotation speed of the rotating ring, the abnormality determination level, and the route of the walk-around check.

### ADVANTAGEOUS EFFECTS OF THE INVENTION

According to one aspect of the present invention, vibration analysis can be performed more easily. According to another aspect of the present invention, an efficient and accurate vibration analysis can be performed.

### BRIEF DESCRIPTION OF THE DRAWINGS

FIG. 1 is a block diagram of a machine component diagnosis system according to a first embodiment of the invention.
FIG. 2 shows a table of bearing components and relevant frequencies.
FIG. 3 is a flow diagram to show a diagnosis process when a bearing damage diagnosis is selected in the machine component diagnosis system.
FIG. 4 is a flow diagram to show a diagnosis process when a vibration value measurement/simple diagnosis is selected.
FIG. 5 is a flow diagram to illustrate a diagnosis process when a frequency analysis is selected.
FIG. 6 is a block diagram of the machine component diagnosis system according to a second embodiment of the invention.
FIG. 7 is a flow diagram to illustrate a diagnosis process according to the second embodiment.

### MODE FOR CARRYING OUT THE INVENTION

Hereinafter, embodiments of the present invention will be described with reference to the drawings.

The scope of the present invention is not limited to the following embodiments, i.e., changes and modifications can be made to the embodiments within the scope of the technical concept of the present invention.

### First Embodiment

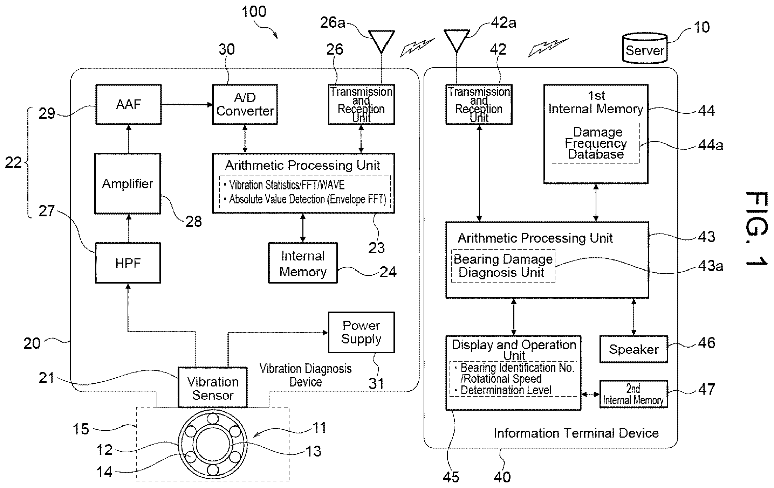

A first embodiment of the present invention will be described with reference to FIG. 1 to FIG. 5.

FIG. 1 is a block diagram of a machine component diagnosis system 100 according to the first embodiment. The machine component diagnosis system 100 includes a server 10, a vibration diagnosis device 20, and an information terminal device 40. The machine component diagnosis system 100 is a system configured to diagnose machine parts and components. In this embodiment, a rolling bearing 11 will be described as an example of a diagnosis target (mechanical component). It is assumed that the vibration diagnosis device 20 can operate in any of a plurality of modes (e.g., a bearing damage diagnosis mode, a vibration value measurement mode, a simple diagnosis mode, and a frequency analysis mode).

The rolling bearing 11 includes an outer ring 12 that is fitted in a housing 15, an inner ring 13 that is fitted over a rotation shaft of a mechanical facility or machine (not shown), a plurality of rolling elements 14 that are arranged between the outer ring 12 and the inner ring 13 and can roll between the outer ring 12 and the inner ring 13, and a retainer (not shown) that holds the rolling elements 14 therein such that the rolling elements 14 can roll.

Major components of the vibration diagnosis device 20 include a vibration sensor 21, a filtering unit (filter processing unit) 22, an arithmetic processing unit 23, an internal memory 24, a transmission/reception unit 26, an amplifier 28, an A/D converter 30, and a power supply 31. The filtering unit 22 has a high-pass filter (HP filter) 27 and an anti-alias filter (AA filter) 29. The transmission/reception unit 26 may be referred to as a wireless communication unit. The internal memory 24 may be referred to as a storage unit.

The vibration sensor 21 is, for example, a piezoelectric acceleration sensor. The vibration diagnosis device 20 is attached to the housing 15, and electric power is supplied to the vibration sensor 21 from the power source 31 so that the vibration sensor 21 detects vibration of the rolling bearing 11.

For example, a female screw portion (not shown) may be formed at a distal end portion of the vibration diagnosis device 20 to which the vibration sensor 21 is attached, and the vibration diagnosis device 20 may be fixed to the housing 15 by attaching a magnet to a member screwed to the female screw portion.

The power supply 31 is composed of a lithium battery or the like, and can be charged from external device via a USB terminal (USB cable) or the like. Further, a switch (not shown) configured to turn the power supply 31 on and off is provided on a side surface of the vibration diagnosis device 20.

The vibration signal detected by the vibration sensor 21 passes through the HP filter 27, the amplifier 28, the AA filter 29, and the A/D converter 30 in this order. The HP filter 27 and the AA filter 29, which constitute in combination the filtering unit 22, function as a band-pass filter. As the filtering unit 22 functions as the band-pass filter, a specific (desired) frequency band is extracted from the vibration signal detected by the vibration sensor 21. The vibrational signal is amplified by the amplifier 28, converted into a digital signal by A/D converter 30, and sent to the arithmetic processing unit 23.

The arithmetic processing unit 23 has a filtering function, and performs filtering processing on the particular frequency band extracted by the HP filter 27 and the AA filter 29. In this embodiment, therefore, the filtering function of the arithmetic processing unit 23 functions as a part of the filtering unit 22. In addition, the arithmetic processing unit 23 calculates the vibration value from the signal after the A/D conversion. The arithmetic processing unit 23 generates data used to display the frequency range and the waveform that changes over time, and further generates diagnostic spectrum data by performing frequency analysis after absolute value detection. For example, the arithmetic processing unit 23 performs an absolute value processing or an envelope processing on the filtered signal as needed, and then performs FFT analysis to generate spectral data. The data after the A/D conversion (A/D converted data), the calculated spectral data, and the like are temporarily stored in the internal memory 24.

The transmission/reception unit 26 is configured to comply with a wireless communication standard such as Bluetooth^{®}, for example. The transmission/reception unit 26 receives the operation command signal from the information terminal device 40, and transmits the signal of the spectrum data obtained by the analysis function of the arithmetic processing unit 23 to the information terminal device 40. That is, the transmission/reception unit 26 transmits various data after the arithmetic process to the information terminal device 40 such as a tablet or a personal computer by Bluetooth communication. The communication between the vibration diagnosis device 20 and the information terminal device 40 may be performed by wire. The reference numeral 26a denotes an antenna.

The information terminal device 40 is a smartphone, a tablet, a personal computer, or the like, and includes a transmission/reception unit 42, an arithmetic processing unit 43, a first internal memory 44, a display operation unit 45, a speaker 46, and a second internal memory 47. The first internal memory 44 has a damage frequency database (DB) 44a. The arithmetic processing unit 43 includes a bearing failure diagnoser 43a. The display operation unit 45 may be referred to as a display unit or an output unit. The transmission/reception unit 42 is a communication unit that transmits and receives signals to and from the vibration diagnosis device 20. The first internal memory 44 and the second internal memory 47 may be referred to as a storage unit or storage units.

An application program may be installed in the information terminal device 40 through the Internet, and may be updated. Reference numeral 42a denotes an antenna. By using the application program, the information terminal device 40 can perform vibration value display, waveform display, bearing damage analysis, determination result display, storage of determination results, conversion from vibration data to sound, and reproduction (replay) of the sound based on various data received from the vibration diagnosis device 20.

In the information terminal device 40, based on the spectrum data received by the transceiver 42 from the transmission/reception unit 26 of the vibration diagnosis device 20, the arithmetic processing unit 43 conducts calculation and processing according to a predetermined procedure while referring to the damage frequency database 44a, which includes various information such as pulse frequency derived from (caused by) damage of components and the identification number of the rolling bearing 11. The database 44a is stored in the first internal memory 44. The result of calculation and processing is sent to the display-and-operation unit 45 (the image of the result is displayed), and stored in the second internal memory 47.

The transmission/reception unit 42 transmits and receives various data to and from the vibration diagnosis device 20. For example, the transmission/reception unit 42 transmits an operation command to the vibration diagnosis device 20. In addition, the transmission/reception unit 42 receives the spectrum data and the vibration measurement result from the vibration diagnosis device 20.

The display-and-operation unit 45 displays a vibration value, a bearing damage diagnostic result, various waveforms, and the like. In addition, a user can use the display-and-operation unit 45 to select and enter the identification number of the rolling bearing 11 to be diagnosed, the rotation speed of the rotating ring (inner ring), the damage determination level, and the like. The display-and-operation unit 45 is, for example, a liquid crystal display unit having a touch panel function.

The arithmetic processing unit 43 refers to the database 44a, which has the information such as pulse frequency derived from the damage and which is stored in the first internal memory 44, to diagnose (determine) the presence/absence of damage to the rolling bearing 11 and detect the damaged portion, based on the spectrum data received from the transmission/reception unit 26 of the vibration diagnosis device 20.

The pulse frequency derived from the damage of the rolling bearing 11, which is stored in the first internal memory 44, is the frequency (conversion frequency) of the rolling bearing 11, which is obtained by a conversion process based on the predetermined rotational speed, and the pulse frequency used for the damage diagnosis is obtained by calculating the conversion frequency using the actual rotational speed of the rolling bearing 11.

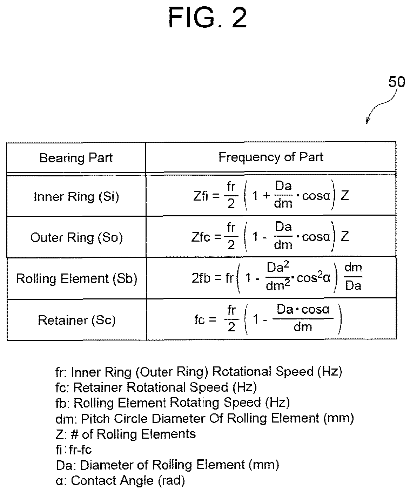

The identification number of the rolling bearing 11 may be selected from a list displayed on the screen of the display-and-operation unit 45 of the information terminal device 40, or may be manually (individually) entered. Incidentally, if the identification number of the rolling bearing 11 is not registered, the user enters the conversion frequency for each component at a predetermined rotational speed, and then the arithmetic processing unit 43 uses the predetermined relational expression shown in Table 50 of FIG. 2 and calculates the pulse frequency derived from the damage for each component of the rolling bearing 11.

The damage determination level may be selected from a plurality of candidates displayed on the screen of the display-and-operation unit 45 of the information terminal device 40, or may be manually entered.

The data stored in the first internal memory 44 and the second internal memory 47 of the information processing device 40 may be stored in the server 10 or another device (for example, a host computer).

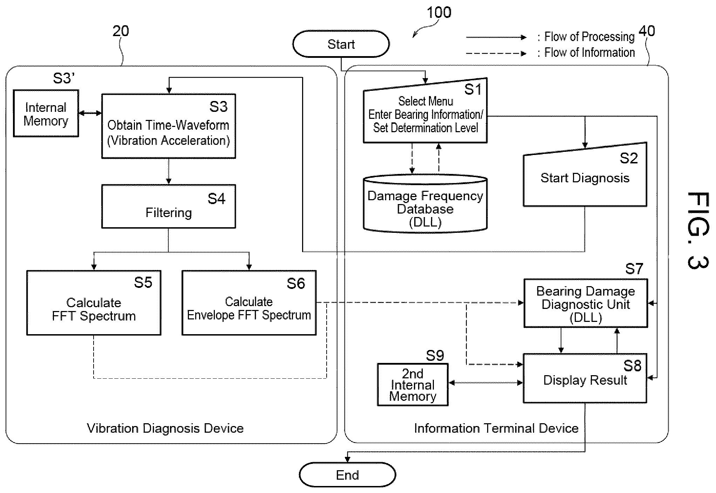

Next, a procedure of measurement, diagnosis, and the like by the machine component diagnosis system 100 of this embodiment will be described. FIG. 3 is a flowchart to describe processing such as measurement and diagnosis executed by the machine component diagnosis system 100.

The user turns on the power supply 31 of the vibration diagnosis device 20 and selects a measurement menu from the entry screen of the display-and-operation unit 45 of the information terminal device 40 (Step S1). Upon selecting the measurement menu, the entry screen displays the following functions (modes): bearing damage diagnosis function, vibration value measurement function, simple diagnosis function, frequency analysis function, time-and-waveform analysis function, data storage and display function.

The bearing damage diagnosis function (mode) diagnoses damage to the outer ring 12, the inner ring 13, and the raceway and rolling surface of the rolling element (balls) 14 of the rolling bearing 11, the presence/absence of damage such as flaking and pressure dents, and damaged parts thereof.

The vibration value measuring function (mode) measures effective values of displacement, a speed, and an acceleration of vibration. The vibration value measuring function also measures peak values of the displacement, speed and acceleration of the vibration, and measures crest factors of the displacement, speed and acceleration of the vibration.

The simple diagnosis function (mode) compares the effective values and peak values of the displacement, speed, acceleration and the like of the detected vibration with predetermined determination values (evaluation values or threshold values), and quickly diagnoses the presence/absence of an abnormality in the rotating unit.

The frequency analysis function (mode) displays a FFT spectrum obtained from frequency analysis on the vibration signal.

The time-and-waveform analysis function (mode) displays a waveform of the vibration signal that changes over time.

The data storage and display function (mode) stores and displays a series of measurement results of bearing damage diagnosis, vibration value measurement, frequency analysis, and time-and-waveform analysis.

### Bearing Damage Diagnosis

If the user wants to select the bearing damage diagnosis function (bearing damage diagnosis mode) in the mechanical component diagnosis system 100, the user selects and enters the identification number of a bearing to be diagnosed, the rotation speed of the rotating ring, the damage determination level, and the like in Step S1, as shown in FIG. 3. Then, various kinds of information such as a pulse frequency derived from damage corresponding to the identification number of the bearing is retrieved from the first internal memory 44, and the information is set. The user then instructs the start of diagnosis (Step S2).

The vibration diagnosis device 20 operates based on a command signal (mode designation signal) transmitted from the transmission/reception unit 42 of the information terminal device 40, and the vibration sensor 21 acquires a waveform (vibration signal) of the vibration of the rolling bearing 11 (Step S3). The obtained vibration signal is filtered by the filtering unit 22 (Step S4), and a waveform in a particular frequency band is extracted. The command signal (mode designation signal) transmitted from the information terminal device 40 to the vibration diagnosis device 20 may be referred to as an input signal from outside to the vibration diagnosis device 20.

Then, the arithmetic processing unit 23 performs frequency analysis on the waveform in the frequency band extracted by the filter processing unit 22 to generate a FFT spectrum waveform (Step S5), or performs frequency analysis after performing absolute value detection processing or envelope processing to generate an envelope FFT spectrum (Step S6).

FFT spectrum is averaged using an exponential average. The arithmetic processing unit (processor) 23 is an FFT calculator that generates a frequency spectrum of the vibration signal, and generates a frequency spectrum of the vibration signal based on FFT algorithm and the envelope analysis.

The frequency spectrum is transmitted as spectrum data from the transmission/reception unit 26 of the vibration diagnosis device 20 to the information terminal device 40. Since the data transmitted to the information terminal device 40 is spectral data obtained upon applying the FFT processing to the time-and-waveform signal detected by the vibration sensor 21, an amount of data to be transmitted is greatly reduced as compared with a case where the time-and-waveform is transmitted to the information terminal device 40. Therefore, the data transfer time is shortened, and the communication time is reduced.

The spectrum data received by the transmitting/receiving unit 42 of the information terminal device 40 is diagnosed, i.e., the presence/absence of damage to the rolling bearing 11 is checked by the bearing damage diagnosing unit 43a of the arithmetic processing unit 43 as the bearing damage diagnosing unit 43a refers to the bearing information stored in the first internal memory 44 (Step S7).

Specifically, the pulse frequency derived from the damage of each component of the rolling bearing 11 is calculated in advance using the conversion frequency of the rolling bearing 11 and the actual rotational speed of the rolling bearing 11. Then, whether or not the rolling bearing 11 is damaged is determined and which component is damaged is determined by comparing the diagnostic spectrum data received from the vibration diagnosis device 20 with the pulse frequency of each component (by determining whether "peak frequency in diagnostic spectrum = pulse frequency" is established or not). The pulse frequency derived from the failure (damage) of the rolling bearing 11 includes the inner ring flaw component Si, the outer ring flaw component So, and the rolling element flaw component Sb, and the respective levels of the frequency components are extracted.

Then, whether the damaged part is the outer ring 12, the inner ring 13, or the rolling elements 14 is determined, and the result of determination is displayed on the display-and-operation unit 45 and stored (Step S8). Thus, the display-and-operation unit 45 outputs (displays) the diagnostic result.

After the bearing damage diagnosis, if it is desired to change the bearing identification number, the rotational speed of the rotating ring, and/or the damage determination level, then the user selects and enters new bearing identification number, rotational speed of the rotating ring, and/or damage determination level to retrieve various information such as the pulse frequency derived from the damage corresponding to the identification number of the bearing from the first internal memory 44, without executing Step S2 to Step S6, i.e., it is possible to re-diagnose (re-determine) the presence/absence of damage to the rolling bearing 11 under the changed conditions without executing Step S2 to Step S6 (Step S7), and output the result of re-diagnosis (re-determination) to the display-and-operation unit 45 to display the re-diagnosis result and save the re-diagnosis result (Step S8).

Further, the bearing damage diagnosis result stored in the second internal memory 47 is retrieved and displayed on the display-and-operation unit 45 (Step S9), and the bearing identification number, the rotational speed of the rotating ring, and/or the damage determination level may be changed to perform the re-diagnosis (Step S7), and the result may be displayed and stored (Step S8).

In addition, the vibration signal obtained by the vibration sensor 21, which is stored in the internal memory 24, may be retrieved (Step S3') and then the process of Step S4 and subsequent steps may be executed.

### Vibration Value Measurement/Simple Diagnosis

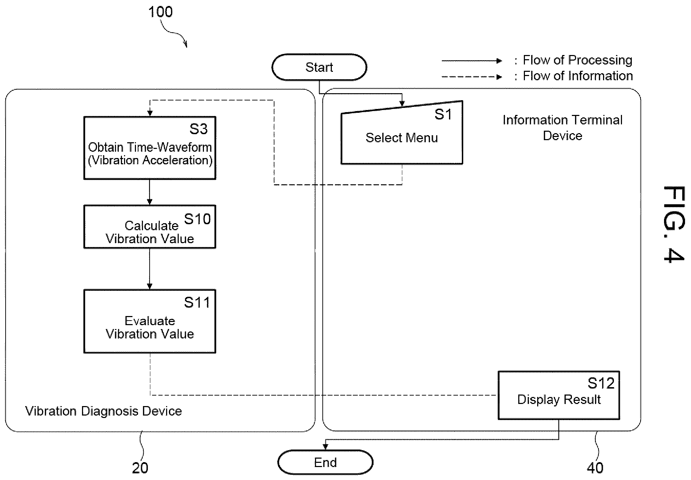

In Step S1, if the vibration value measurement/simple diagnosis function (vibration value measurement/simple diagnosis mode) of the vibration diagnosis device 20 is selected, as shown in FIG. 4, the operation command of the vibration value measurement/simple diagnosis is transmitted to the diagnosis device 20 via the transmission/reception unit 42 of the information terminal device 40, and the vibration sensor 21 acquires the time-and-waveform of the vibration of the rolling bearing 11 (Step S3).

Subsequently, the arithmetic processing unit 23 calculates a vibration value, which is a determination parameter used for determination by the simple diagnostic function (Step S10). The determination parameter(s) may include at least one of the following calculated vibration values: an effective value (RMS) of the speed or acceleration of the vibration, a peak value (PEAK) of the speed or acceleration of the vibration, a crest factor (CF) of the speed or acceleration of the vibration, and a P-P value of the displacement. P-P is an abbreviation of Peak-to-Peak, and the P-P value represents a double amplitude value in the waveform of the vibration.

By using the determination parameters of the accelerations, the speeds, and the displacements calculated in Step S10, the simple diagnosis function can make the absolute value determination according to ISO criterion and can make the determination with the predetermined determination values. In other words, the calculated determination parameters, i.e., the effective values (RMS) of the acceleration and speed, the peak values (PEAK) of the acceleration and speed, the crest factors (CF) of the acceleration and speed, and/or the P-P value of the displacement, are compared with the respective determination value (evaluation value) to perform the simple diagnosis (Step S11).

The effective value (RMS), the peak value (PEAK), and the crest factor (CF) are compared with the respective determination values to perform the diagnosis (whether or not the effective value (RMS), the peak value (PEAK), and the crest factor (CF) are greater than the respective determination values decides the result of the diagnosis). The respective determination values (determination results) are stored in the internal memory 24.

The determination result (diagnostic result) of the vibration value is transmitted to the information terminal device 40 via the transmission/reception unit 26 of the vibration diagnosis device 20, and the display-and-operation unit 45 displays the determination result in color (Step S12).

As described above, in the vibration value measurement/simple diagnosis mode, the arithmetic processing unit 23 calculates the basic statistic of at least one vibration value obtained from the waveform of the signal detected by the vibration sensor 21, and diagnoses the presence/absence of an abnormality in the diagnosis target (the rolling bearing 11).

When the vibration value measurement/simple diagnosis mode (FIG. 4) is compared with the bearing damage diagnosis mode (FIG. 3), the bearing damage diagnosis mode can be expressed as follows. That is, when the bearing damage diagnosis unit 43a diagnoses an abnormality of the diagnosis target (the rolling bearing 11), the information terminal device 40 transmits, to the arithmetic processing unit 23 of the vibration diagnosis device 20, an input signal for making a setting not to diagnose the presence/absence of an abnormality of the diagnosis target.

### Frequency Analysis

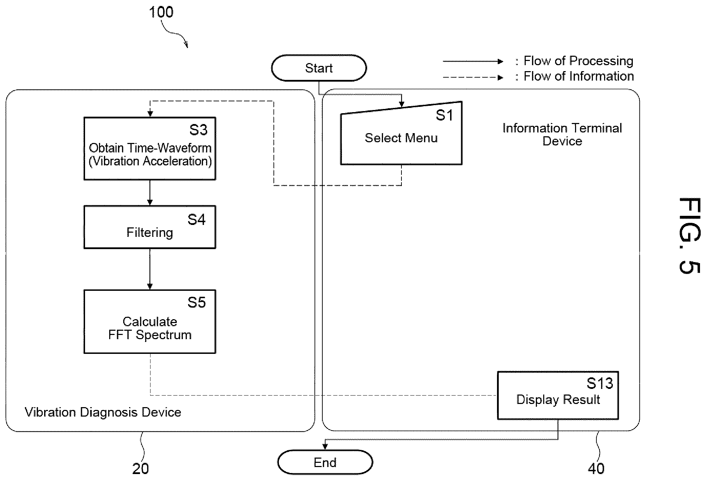

If the frequency analysis function (frequency analysis mode) of the mechanical component diagnosis system 100 is selected in Step S1, as illustrated in FIG. 5, an operation command of the frequency analysis is transmitted to the vibration diagnosis device 20 via the transmission/reception unit 42 of the information terminal device 40. The vibration diagnosis device 20 operates on the basis of a command signal received from the information terminal device 40, and the vibration sensor 21 acquires a time-and-waveform of the vibration (Step S3).

The obtained time-and-waveform of the vibration is filtered by the filtering unit 22 (Step S4), and a waveform in a particular frequency band is extracted. Then, the arithmetic processing unit 23 analyzes the frequency of the vibration signal in the above-mentioned particular frequency band calculated by the filtering unit 22 (Step S5). The arithmetic processing unit 23 is an FFT calculator that calculates the frequency spectrum of the vibration signal, and calculates FFT spectrum (waveform) based on FFT algorithm. The FFT waveform is subjected to an averaging process using an exponential average. The envelope processing may additionally be executed if desired.

The calculated FFT waveform is transmitted from the transmission/reception unit 26 of the vibration diagnosis device 20 to the transmission/reception unit 42 of the information terminal device 40. The information terminal device 40 displays the received FTT waveform on the display-and-operation unit 45 (Step S13).

As described above, according to the wireless vibration diagnosis device 20 of this embodiment, the vibration sensor 21 detects the vibration of the rolling bearing 11 (mechanical component), the filtering unit 22 extracts a predetermined frequency band from the waveform of the vibration signal, the arithmetic processing unit 23 frequency-analyzes the filtered waveform to obtain the spectral data, the transmission/reception unit 26 transmits the spectral data to the information terminal device 40, and the information terminal device 40 diagnoses the vibration of the rolling bearing 11. Thus, an amount of data to be transmitted from the vibration diagnosis device 20 to the information terminal device 40 can be reduced and the data transfer time can be shortened. In addition, since the data transfer time can be shortened, the power consumption of the vibration diagnosis device 20 can also be reduced.

Further, the arithmetic processing unit 23 of the vibration diagnosis device 20 can perform a simple diagnosis by calculating at least one vibration value obtained from the waveform of the signal detected by the vibration sensor 21 and comparing the calculated vibration value with a vibration evaluation criterion based on ISO 10816 or with a vibration determination value set in advance. That is, the vibration diagnosis device 20 can diagnose the rolling bearing 11 without transmitting the vibration data to the information terminal device 40.

According to the mechanical component diagnosis system 100 of this embodiment, the arithmetic processing unit 43 (bearing damage diagnosis unit 43a) of the information terminal device 40 compares the frequency component included in the spectrum data transmitted from the wireless vibration diagnosis device 20 with the damage frequency derived from the damage of the rolling bearing 11 to diagnose the abnormality of the rolling bearing 11, and the display-and-operation unit 45 outputs (displays) the diagnostic result. Therefore, it is possible to reduce the amount of data transmitted from the wireless vibration diagnosis device 20 to the information terminal device 40 and accurately diagnose the rolling bearing 11.

Also, the information terminal device 40 includes the database 44a (first internal memory 44) that stores the pulse frequency resulting from the damage of the rolling bearing 11 in the form of the damage frequency converted based on the predetermined rotation speed of the rolling bearing 11, and the pulse frequency is given by calculating the converted damage frequency of the database 44a based on the actual rotation speed of the rolling bearing 11. Therefore, it is not necessary to store the dimensions of the individual rolling bearings 11 in the information terminal device 40 so that the dimensions of the rolling bearings 11 can be concealed.

According to this embodiment, when it is desired to change the bearing identification number, the rotational speed of the rotating ring and/or the damage determination level after the bearing damage diagnosis, it is possible to re-diagnose the presence/absence of the damage of the same or another rolling bearing 11 under the changed conditions without executing Step S2 to Step S6 by selecting and entering the new bearing identification number, the new rotational speed of the rotating ring and/or the new damage determination level and retrieving various kinds of information, such as the pulse frequency derived from the damage corresponding to the entered identification number of the bearing, from the first internal memory 44. Further, the re-diagnosis result can be sent to the display-and-operation unit 45 to display the re-diagnosis result, and the re-diagnosis result can be stored in the second memory 47.

The result of the bearing damage diagnosis stored in the second internal memory 47 may be retrieved and displayed on the display-and-operation unit 45, and the diagnosis may be performed again by changing the bearing identification number, the rotational speed of the rotating ring and/or the damage determination level. The result of the diagnosis of this time can also be displayed on the display-and-operation unit 45 and stored in the second memory 47.

It is also possible to retrieve the vibration signal acquired by the vibration sensor 21, which is stored in the internal memory 24, and execute the processes of Step S4 and subsequent steps.

According to this embodiment, therefore, it is possible to more easily and efficiently perform accurate vibration diagnosis and vibration analysis.

In the above-described embodiment, the vibration diagnosis device 20 receives the mode designation signal (function designation signal) from the information terminal device 40 and operates in accordance with the function designated by the signal, but this embodiment is not limited to such a configuration. For example, the vibration diagnosis device 20 may include an input unit, and the mode selection (mode determination) may be performed via the input unit.

In the above-described embodiment, the first internal memory 44 and the second internal memory 47 in the information terminal device 40 are shown as separate memories (storage units), but the first internal memory 44 and the second internal memory 47 may be combined to a single memory.

According to this embodiment, the following advantageous effects can be obtained.
(1) The determination level of bearing damage analysis can be changed.
(2) The vibration data detected by the vibration sensor can be retrieved from the internal memory, and the analysis condition can be changed in addition to the effect (1) and re-diagnosis can be performed.

Once the vibration is measured, the analysis diagnosis device of this embodiment can re-use the measured vibration data while changing various conditions to perform re-analysis and re-diagnosis of the damage. Thus, a reliable and efficient maintenance inspection of the rotating equipment can be provided.

### Second Embodiment

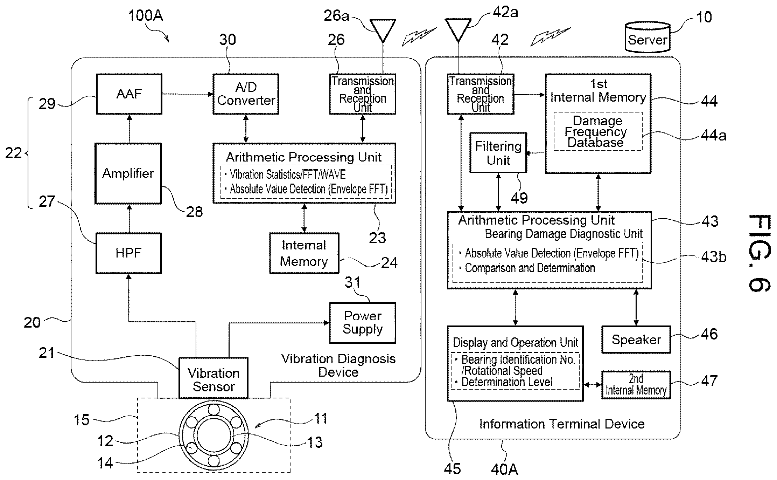

FIG. 6 is a block diagram illustrating a configuration of a mechanical component diagnostic system 100A according to a second embodiment of the present invention. Configurations similar to those of the first embodiment are denoted by the same reference numerals, and description thereof will be omitted.

As illustrated in FIG. 6, the mechanical component diagnostic system 100A includes a radio-type vibration diagnosis device 20 and an information terminal device 40A. In this embodiment, in addition to the diagnosis of the rolling bearing 11 described in the first embodiment, the operation noise of the rolling bearing 11 is reproduced by the speaker 46. The function of reproducing the operating sound of the rolling bearing 11 by the speaker 46 is referred to as a listening function (sound reproducing function). Therefore, in the second embodiment, the sound reproducing function is added to the diagnosis menu. Since the speaker 46 generates an operation sound, it may be referred to as an output unit.

Since the time-and-waveform of the vibration acquired by the vibration sensor 21 is used for the reproduction of the operation sound of the rolling bearing 11, the time-and-waveform of the vibration is transmitted from the vibration diagnosis device 20 to the information terminal device 40A. Therefore, in the mechanical component diagnostic system 100A of this embodiment, the information terminal device 40A has a filtering unit 49. The filtering unit 49 extracts a specific frequency band from the time-and-waveform of the vibration, and passes the extracted frequency band to the arithmetic processing unit 43. The arithmetic processing unit 43 of the information terminal device 40A has a function of performing envelope processing and FFT analysis on time-and-waveforms of a particular frequency band (bearing damage diagnosing unit 43b).

### Sound Reproduction

A series of processes performed by the mechanical component diagnostic system 100A of this embodiment will be described below. It is assumed that the vibration diagnosis device 20 can operate in any of a plurality of modes (bearing damage diagnosis mode, a vibration value measurement mode, a simple diagnosis mode, a frequency analysis mode, a sound reproduction mode, and the like). The bearing damage diagnosis, the vibration value measurement, the simple diagnosis, and the frequency analysis are the same as those in the first embodiment, and thus description thereof will be omitted.

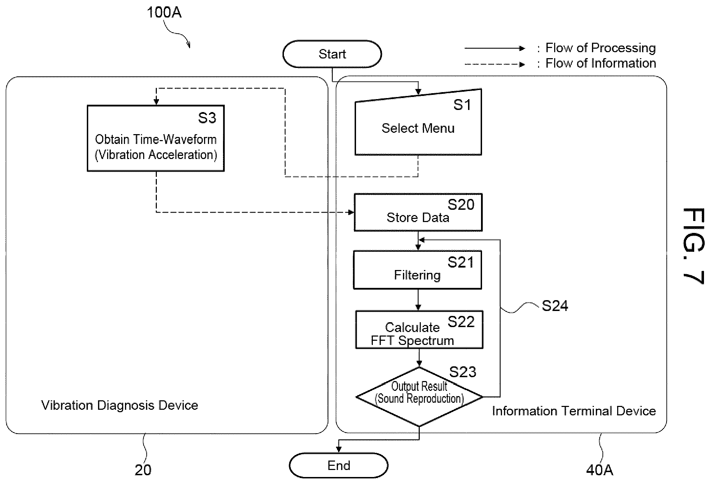

FIG. 7 is a flowchart illustrating a series of processes executed by the mechanical component diagnostic system 100A when the sound reproduction mode is selected in the selection menu.

In the second embodiment, as illustrated in FIG. 7, if the sound reproduction mode of the mechanical component diagnosis system 100A is selected in Step S1, the operation command of the sound reproduction is transmitted to the vibration diagnosis device 20 via the transmission/reception unit 42 of the information terminal device 40A.

The vibration diagnosis device 20 operates on the basis of a command signal received from the information terminal device 40A, and the vibration sensor 21 acquires a time-and-waveform of the vibration (Step S3).

The acquired time-and-waveform (data) of the vibration is transmitted to the information terminal device 40A via the transmission/reception unit 26 of the vibration diagnosis device 20. The received time-and-waveform (data) of the vibration is stored in the first internal memory 44 in order to enable repeated use of the time-and-waveform data (Step S20).

Subsequently, the filtering unit 49 performs a filtering process to extract a particular frequency band that the operator (user) desires to hear (Step S21), and the arithmetic processing unit 43 calculates FFT waveform of the vibration signal based on FFT algorithm (Step S22). The calculated FFT waveform is sent to the speaker 46, and the operation sound (sound of the rotating bearing) is reproduced and output (Step S23). If it is desired to hear the operation sound in another frequency band (Step S24), the process returns to Step S21, and the time-and-waveform of the vibration stored in the first internal memory 44 is retrieved, and the same processing is performed.

As described above, according to the mechanical component diagnosis system 100A of this embodiment, it is possible to add the sound reproduction function to the mechanical component diagnosis system 100 of the first embodiment.

In particular, by providing the filtering unit 49 in the information terminal device 40A and performing FFT analysis in the arithmetic processing unit 43, it is possible to reproduce and output operation sounds in a plurality of frequency bands.

Other configurations and processing are the same as those of the machine component diagnosis system 100 of the first embodiment.

It should be noted that the present invention is not limited to the above-described embodiments, i.e., changes, modifications, improvements, and the like can be made to the embodiments as appropriate. For example, the machine component/part to be diagnosed is not limited to the rolling bearing 11, and the present invention can be applied to any machine component/part if vibration occurs in the machine component/part during operation, for example, a machine part such as a gear.

In addition, in the mechanical component diagnostic system 100 (100A) of each of the above-described embodiments, the vibration diagnosis device 20 and the information terminal device 40 (40A) are associated with each other in a one-to-one manner, and data is transmitted and received by the particular vibration diagnosis device 20 and the particular information terminal device 40 (40A). However, various diagnoses by the machine component diagnosing system 100 (100A) may be carried out in a system that includes a single information terminal device 40 (40A) and a plurality of vibration diagnosis devices 20. The vibration diagnosis devices 20 are associated with the single information terminal device 40 (40A) such that a plurality of machine components/parts are cyclically (periodically) monitored. In the case of the cyclic monitoring, one vibration diagnosis device 20 may be installed in each of a plurality of mechanical components, and the mechanical components may be monitored and diagnosed by the information terminal device 40 (40A), such as a tablet computer, which is portable and carried by the operator.

In addition, when the operator who carries the information terminal device 40 (40A) approaches each of the vibration diagnosis devices 20 for monitoring during walk-around check, the power supply 31 of the vibration diagnosis device 20 approached by the operator is automatically turned on (i.e., the vibration diagnosis device 20 is automatically activated at the time of the mechanical component diagnosis as the information terminal device 40, 40A approaches). Then, vibration detection, vibration analysis, and signal transmission of the vibration diagnosis device 20 may be automatically performed in accordance with an instruction from the information terminal device 40 (40A).

USB terminal installed in the radio-type vibration diagnosis device 20 may be used when transmitting the time-and-waveform and spectrum data to the information terminal device 40 (40A) by wire or cable, in addition to when electrically charging the power supply 31 from the outside as described above.

Various data stored in the information terminal device 40 (40A) may be sent to an external device (external terminal device) such as the server 10 or a host computer, and further detailed management may be carried out by the external device (e.g., management of the tendency of change in the vibration level over time, display of the frequency spectrum, display of the time-and-waveform, display of the bearing precision diagnosis spectrum, management of the route of walk-around check (patrol), and preparation of a simple report may be carried out by the external device), and re-diagnosis may be carried out by the external device with the changed determination level for diagnosing the presence/absence of damage, the changed bearing identification number and/or the changed rotational speed of the rotating ring if the bearing precision diagnosis spectrum is used. More specifically, the machine component diagnosis system 100A may be used as a system to diagnose a diagnosis target (bearing 13) provided in each of a plurality of facilities (machines), and the machine component diagnosis system 100A may further include an external terminal in which management software is installed. The external terminal may have a communication function, a display function, and a printing function. The external terminal device may obtain, from the information terminal device 40A, a vibration waveform signal, spectrum data, a diagnostic result of the arithmetic processing unit 23, and a diagnostic result of the diagnosis unit 43a, and perform the following processing. In other words, the external terminal may be configured to:
manage a trend of change in the vibration over time for each of a plurality of facilities;
display the spectral data and the signal of the waveform;
display the diagnostic result of the diagnosis unit 43a;
display the presence/absence of an abnormality based on the diagnosis of the arithmetic processing unit 23;
cause the diagnosis unit 43a to carry out re-diagnosis with a different identification number of the bearing 13 (another bearing), a different revolution speed of the rotating ring, and different bearing damage determination level of the diagnostic unit 43a;
set up a route of walk-around check when diagnosing a plurality of facilities; and
automatically create a report that shows the management of the above-mentioned trend of change in the vibration, the displayed waveform signal, the displayed diagnostic result, the displayed presence/absence of the abnormality, the bearing identification number, the rotational speed of the rotating ring, the abnormality determination level and the route of the walk-around check.

Further, the database 44a of the pulse frequency, which is stored in the first internal memory 44 of the information terminal device 40 (40A) of the above-described embodiment, is useful in concealing the dimensions of the mechanical component (rolling bearing 11), and the use of the information terminal device 40 (40A) is not limited to diagnosing an anomaly using the radio-type vibration diagnosis device 20. That is, the technical scope of the present invention includes an information terminal device 40 (40A) that extracts a predetermined frequency band from the waveform of the signal of the mechanical component detected by the vibration sensor 21, compares the frequency-analyzed frequency component with the pulse frequency derived from the damage of the mechanical component, and diagnoses the abnormality of the mechanical component, and this information terminal device includes a database that stores the pulse frequency derived from the damage of the mechanical component as the damage frequency converted based on the predetermined rotation speed of the mechanical component, and the damage frequency is given by applying a calculation process to the damage frequency in the database using the actual rotation speed of the mechanical component.

The vibration analysis and diagnosis device (system) of the present invention may be a device that includes a vibration detection unit configured to detect vibration of mechanical facility (machine), an amplification unit configured to amplify the detected vibration signal, a calculation-and-transmission unit configured to arithmetically process the amplified vibration signal and wirelessly transmit the arithmetic data to an information terminal device such as a tablet or a personal computer, a reception unit configured to receive the arithmetic data, a display unit configured to display the vibration value calculated from the received data calculation and relevant frequency and waveform, a bearing frequency database unit configured to store the frequency derived from the defect of the bearing component, a determination level setting unit and an analysis determination unit configured to automatically determine the presence/absence of the occurrence of the defect on the surface of the bearing component and which component has the defect by using the bearing frequency database and the rotational speed information. The vibration analysis and diagnosis device (system) of the present invention may be a device that also includes a re-diagnosis unit configured to carry out the re-analysis and re-determination with a different (altered) bearing identification number, a different rotational speed information, and a different analysis condition, based on the analyzed frequency spectrum.

The machine component diagnosis system, the vibration diagnosis device, and the information terminal device of the present invention may be applied to a case of measuring vibration of a plurality of rotating parts (particularly, rolling bearings) used in a rotating machine facility, such as an elevator hoisting machine and a rotating equipment associated with the elevator hoisting machine, an escalator driving device, a machining tool spindle, and a motor, and determining the presence/absence of an abnormality in the bearing and a location of the abnormality.

While specific embodiments have been described above, these embodiments are merely illustrative and are not intended to limit the scope of the invention. The device and methods described herein may be embodied in other forms than those described above. It should be noted and understood that there can be improvements and modifications made of the present invention described above without departing from the scope of the invention as set forth in the accompanying claims.

### REFERENCE NUMERALS AND SYMBOLS

- 11: Rolling bearing
- 20: Vibration diagnosis device
- 21: Vibration sensor
- 22: Filtering unit
- 23: Arithmetic processing unit
- 24: Internal memory
- 27: HP filter
- 28: AA filter
- 31: Power supply
- 40: Information terminal device
- 40A: Information terminal device
- 43: Arithmetic processing unit
- 43a: Bearing damage diagnosis part
- 44: First internal memory
- 44a: Damage frequency database
- 45: Display and operation unit
- 46: Speaker
- 47: Second internal memory
- 49: Filtering unit
- 100: Machine component diagnostic system
- 100A: Machine component diagnostic system

## Claims

1. A diagnostic system (100, 100A) comprising:
an information terminal device (40, 40A); and
a vibration diagnosis device (20) configured to diagnose vibration of a diagnosis target (11) in at least two different modes of operation based on an input signal from the information terminal device (40, 40A),
the vibration diagnosis device (20) including:
a vibration sensor (21) configured to detect the vibration of the diagnosis target (11);
a filtering unit (22) configured to extract a waveform in a predetermined frequency band from a signal detected by the vibration sensor (21); and
an arithmetic processing unit (23) configured to perform frequency analysis on the extracted waveform, which is obtained by the filtering unit (22), to generate a FFT spectrum in a first mode of operation;
the arithmetic processing unit (23) being configured to calculate at least one basic statistic of vibration obtained from the waveform of the signal detected by the vibration sensor (21) and determine presence/absence of an abnormality of the diagnosis target (11) in a second mode of operation, in which the arithmetic processing unit (23) does not generate the FFT spectrum,
the information terminal device (40, 40A) including:
a communication unit (42) configured to transmit and receive a signal to and from the vibration diagnosis device (20);
a diagnostic unit (43) that compares a frequency component included in the FFT spectrum transmitted from the vibration diagnosis device (20) with a damage frequency derived from damage of the diagnosis target (11), and diagnoses the abnormality of the diagnosis target (11);
an output unit (45, 46) configured to output a diagnostic result of the diagnostic unit (43);
a database (44a) configured to store the damage frequency derived from the damage of the diagnosis target (11); and
a storage unit (47) configured to store the FFT spectrum generated by the arithmetic processing unit (23) of the vibration diagnosis device (20), and
wherein the diagnosis target (11) is a bearing, and the database (44a) stores a vibration pulse frequency derived from damage of an inner ring (13), an outer ring (12), and a rolling element (14) of the bearing (11) as a bearing damage frequency converted based on a predetermined rotation speed of the bearing (11), wherein
the diagnostic unit (43) is configured to carry out re-diagnosis by comparing the frequency component included in the FFT spectrum stored in the storage unit (47) with a changed damage frequency derived from damage of the diagnosis target (11) by changing at least one of a bearing identification number, a rotational speed of the inner ring (13), and a determination level of bearing damage, **characterized in that,**
when the diagnostic unit (43) diagnoses the abnormality of the diagnosis target (11), the information terminal device (40, 40A) transmits, to the arithmetic processing unit (23) of the vibration diagnosis device (20), an input signal for prohibiting the arithmetic processing unit (23) from determining the presence/absence of the abnormality of the diagnosis target (11).

2. The diagnostic system (100, 100A) according to claim 1, wherein data, which is obtained by AD converting the vibration signal acquired by the vibration sensor (21) and is stored in an internal memory (24) of the vibration diagnosis device (20), is retrieved from the internal memory of the vibration diagnosis device and is used with the FFT spectrum that has undergone the envelope process in which a filtering process, an analyzing process, or both of the filtering process and the analyzing process are altered.

3. The diagnostic system (100, 100A) according to claim 1 or 2, wherein the output unit includes at least one of an image display unit (45) and an audio output unit (46).

4. The diagnostic system (100, 100A) according to claim 3, wherein the diagnostic system is configured to diagnose the diagnosis target (11) provided in each of a plurality of facilities (15),
the diagnostic system further includes an external terminal device to which management software is installed,
the external terminal device is configured to obtain the signal of the waveform, the FFT spectrum, the diagnostic result of the arithmetic processing unit (23) and the diagnostic result of the diagnostic unit (43) from the information terminal device (40, 40A), and
the external terminal device is also configured to:
manage a trend of change in the vibration over time for each of the plurality of facilities (15);
display the FFT spectrum and the signal of the waveform;
display the diagnostic result of the diagnostic unit (43);
display the presence/absence of the abnormality determined by diagnosis of the arithmetic processing unit (23);
change the identification number of the bearing (11), the rotational speed of the inner ring (13) and the bearing damage determination level of the diagnostic unit (43) and cause the diagnostic unit to carry out re-diagnosis with the changed identification number of the bearing (11), the changed rotational speed of the inner ring (13) and the changed bearing damage determination level;
set up a route of walk-around check to diagnose the plurality of facilities (15); and
automatically make a report of the management of the trend of change in the vibration, the displayed waveform signal, the displayed diagnostic result, the displayed presence/absence of the abnormality, the bearing identification number, the rotation speed of the inner ring, the abnormality determination level, and the route of the walk-around check.

## Patentansprüche

1. Diagnosesystem (100, 100A), das umfasst:
eine Informations-Endgerätvorrichtung (40, 40A); sowie
eine Schwingungs-Diagnosevorrichtung (20), die so ausgeführt ist, dass sie Schwingung eines Diagnoseobjektes (11) in wenigstens zwei verschiedenen Betriebsarten auf Basis eines Eingangssignals von der Informations-Endgerätvorrichtung (40, 40A) diagnostiziert,
wobei die Schwingungs-Diagnosevorrichtung (20) einschließt:
einen Schwingungssensor (21), der so ausgeführt ist, dass er die Schwingung des Diagnoseobjektes (11) erfasst;
eine Filter-Einheit (22), die so ausgeführt ist, dass sie eine Wellenform in einem vorgegebenen Frequenzband aus einem durch den Schwingungssensor (21) erfassten Signal extrahiert; sowie
eine Einheit (23) für arithmetische Verarbeitung, die so ausgeführt ist, dass sie Frequenzanalyse an der extrahierten Wellenform durchführt, die durch die Filter-Einheit (22) ermittelt wird, um ein FFT-Spektrum in einer ersten Betriebsart zu erzeugen;
wobei die Einheit (23) für arithmetische Verarbeitung so ausgeführt ist, dass sie wenigstens eine grundlegende Statistik von Schwingung berechnet, die anhand der Wellenform des durch den Schwingungssensor (21) erfassten Signals ermittelt wird, und Vorhandensein/Nichtvorhandensein einer Störung des Diagnoseobjektes (11) in einer zweiten Betriebsart feststellt, in der die Einheit (23) für arithmetische Verarbeitung das FFT-Spektrum nicht erzeugt,
wobei die Informations-Endgerätvorrichtung (40, 40A) einschließt:
eine Kommunikations-Einheit (42), die so ausgeführt ist, dass sie ein Signal zu/von der Schwingungs-Diagnosevorrichtung (20) empfängt/sendet;
eine Diagnose-Einheit (43), die eine Frequenzkomponente, die in dem von der Schwingungs-Diagnosevorrichtung (20) gesendeten FFT-Spektrum enthalten ist, mit einer Schaden-Frequenz vergleicht, die aufgrund von Schaden des Diagnoseobjektes (11) hergeleitet wird, und die Störung des Diagnoseobjektes (11) diagnostiziert;
eine Ausgabe-Einheit (45, 46), die so ausgeführt ist, dass sie ein Diagnoseergebnis der Diagnose-Einheit (43) ausgibt;
eine Datenbank (44a), die so ausgeführt ist, dass sie die aufgrund des Schadens des Diagnoseobjektes (11) hergeleitete Schaden-Frequenz speichert; sowie
eine Speicher-Einheit (47), die so ausgeführt ist, dass sie das durch die Einheit (23) für arithmetische Verarbeitung der Schwingungs-Diagnosevorrichtung (20) erzeugte FFT-Spektrum speichert, und
wobei das Diagnoseobjekt (11) ein Lager ist und die Datenbank (44a) eine Impulsfrequenz von Schwingung speichert, die aufgrund von Schaden eines Innenrings (13), eines Außenrings (12) und eines Wälzkörpers (14) des Lagers (11) hergeleitet wird, als eine Schaden-Frequenz des Lagers, umgewandelt auf Basis einer vorgegebenen Drehgeschwindigkeit des Lagers (11), speichert, wobei
die Diagnose-Einheit (43) so ausgeführt ist, dass sie erneute Diagnose durchführt, indem sie die Frequenzkomponente, die in dem in der Speicher-Einheit (47) gespeicherten FFT-Spektrum enthalten ist, mit einer geänderten Schaden-Frequenz vergleicht, die aufgrund von Schaden des Diagnoseobjektes (11) hergeleitet wird, indem eine Lager-Kennungsnummer, eine Drehzahl des Innenrings (13) oder/und ein Bestimmungsniveau von Lager-Schaden geändert wird/werden,
**dadurch gekennzeichnet, dass**
wenn die Diagnose-Einheit (43) die Störung des Diagnoseobjektes (11) diagnostiziert, die Informations-Endgerätvorrichtung (40, 40A) ein Eingangssignal zu der Einheit (23) für arithmetische Verarbeitung der Schwingungs-Diagnosevorrichtung (20) sendet, mit dem unterbunden wird, dass die Einheit (23) für arithmetische Verarbeitung das Vorhandensein/Nichtvorhandensein der Störung des Diagnoseobjektes (11) feststellt.

2. Diagnosesystem (100, 100A) nach Anspruch 1, wobei Daten, die durch Analog-Digital-Umwandlung des mittels des Schwingungssensors (21) erfassten Schwingungssignals gewonnen werden, und in einem internen Speicher (24) der Schwingungs-Diagnosevorrichtung (20) gespeichert werden, aus dem internen Speicher der Schwingungs-Diagnosevorrichtung abgerufen werden und mit dem FFT-Spektrum verwendet werden, das den Hüllkurven-Prozess durchlaufen hat, in dem ein Filter-Prozess, ein Analyseprozess oder sowohl der Filter-Prozess als auch der Analyse-Prozess geändert werden.

3. Diagnosesystem (100, 100A) nach Anspruch 1 oder 2, wobei die Ausgabe-Einheit eine Bild-Anzeigeeinheit (45) oder/und eine Ton-Ausgabeeinheit (46) einschließt.

4. Diagnosesystem (100, 100A) nach Anspruch 3, wobei das Diagnosesystem so ausgeführt ist, dass es das Diagnoseobjekt (11) diagnostiziert, das in jeder einer Vielzahl von Einrichtungen (15) vorhanden ist,
das Diagnosesystem des Weiteren eine externe Endgerätvorrichtung einschließt, in der Verwaltungs-Software installiert ist,
die externe Endgerätvorrichtung so ausgeführt ist, dass sie das Signal der Wellenform, das FFT-Spektrum, das Diagnoseergebnis der Einheit (23) für arithmetische Verarbeitung und das Diagnoseergebnis der Diagnose-Einheit (43) von der Informations-Endgerätvorrichtung (40, 40A) bezieht, und
die externe Endgerätvorrichtung weiterhin ausgeführt ist zum:
Verwalten eines Trends von Änderung der Schwingung im Verlauf der Zeit für jede der Vielzahl von Einrichtungen (15);
Anzeigen des FFT-Spektrums sowie des Signals der Wellenform;
Anzeigen des Diagnoseergebnisses der Diagnose-Einheit (43);
Anzeigen des Vorhandenseins/Nichtvorhandenseins der mittels Diagnose der Einheit (23) für arithmetische Verarbeitung bestimmten Störung;
Ändern der Kennungsnummer des Lagers (11), der Drehgeschwindigkeit des Innenrings (13) sowie des Bestimmungsniveaus von Lager-Schaden der Diagnose-Einheit (43) und Veranlassen, dass die Diagnose-Einheit erneute Diagnose mit der geänderten Kennungsnummer des Lagers (11), der geänderten Drehgeschwindigkeit des Innenrings (13) sowie des geänderten Bestimmungsniveaus von Lager-Schaden durchführt;
Festlegen einer Route für einen Walk-around-Check zum Diagnostizieren der Vielzahl von Einrichtungen (15);sowie
automatisches Erstellen eines Berichtes zur Verwaltung des Trends von Änderung der Schwingung, des angezeigten Wellenform-Signals, des angezeigten Diagnoseergebnisses, des angezeigten Vorhandenseins/Nichtvorhandenseins der Störung, der Lager-Kennungsnummer, der Drehgeschwindigkeit des Innenrings, des Bestimmungsniveaus von Lager-Schaden und der Route des Walk-around-Checks.

## Revendications

1. Système de diagnostic (100, 100A) comprenant:
un dispositif terminal d'information (40, 40A); et
un dispositif de diagnostic de vibrations (20) configuré pour diagnostiquer les vibrations d'une cible de diagnostic (11) dans au moins deux modes de fonctionnement différents sur la base d'un signal d'entrée provenant du dispositif terminal d'information (40, 40A),
le dispositif de diagnostic des vibrations (20) comprenant:
un capteur de vibrations (21) configuré pour détecter les vibrations de la cible de diagnostic (11);
une unité de filtrage (22) configurée pour extraire une forme d'onde dans une bande de fréquences prédéterminée à partir d'un signal détecté par le capteur de vibrations (21); et
une unité de traitement arithmétique (23) configurée pour effectuer une analyse de fréquence sur la forme d'onde extraite, qui est obtenue par l'unité de filtrage (22), afin de générer un spectre FFT dans un premier mode de fonctionnement;
l'unité de traitement arithmétique (23) étant configurée pour calculer au moins une statistique de base des vibrations obtenue à partir de la forme d'onde du signal détecté par le capteur de vibrations (21) et déterminer la présence/absence d'une anomalie de la cible de diagnostic (11) dans un second mode de fonctionnement, dans lequel l'unité de traitement arithmétique (23) ne génère pas le spectre FFT,
le dispositif terminal d'information (40, 40A) comprenant:
une unité de communication (42) configurée pour transmettre et recevoir un signal vers et depuis le dispositif de diagnostic de vibrations (20);
une unité de diagnostic (43) qui compare une composante de fréquence incluse dans le spectre FFT transmis depuis le dispositif de diagnostic de vibrations (20) avec une fréquence de dommage dérivée du dommage de la cible de diagnostic (11), et diagnostique l'anomalie de la cible de diagnostic (11);
une unité de sortie (45, 46) configurée pour fournir un résultat de diagnostic de l'unité de diagnostic (43);
une base de données (44a) configurée pour stocker la fréquence de dommage dérivée du dommage de la cible de diagnostic (11); et
une unité de stockage (47) configurée pour stocker le spectre FFT généré par l'unité de traitement arithmétique (23) du dispositif de diagnostic des vibrations (20), et
dans lequel la cible de diagnostic (11) est un roulement, et la base de données (44a) stocke une fréquence d'impulsion de vibration dérivée des dommages d'une bague intérieure (13), d'une bague extérieure (12) et d'un élément roulant (14) du roulement (11) sous forme d'une fréquence de dommage du roulement convertie sur la base d'une vitesse de rotation prédéterminée du roulement (11), dans lequel
l'unité de diagnostic (43) est configurée pour effectuer un nouveau diagnostic en comparant la composante de fréquence incluse dans le spectre FFT stocké dans l'unité de stockage (47) avec une fréquence d'endommagement modifiée dérivée de l'endommagement de la cible de diagnostic (11) en modifiant au moins l'un parmi un numéro d'identification de roulement, une vitesse de rotation de la bague intérieure (13) et un niveau de détermination de l'endommagement du roulement, **caractérisé en ce que,**
lorsque l'unité de diagnostic (43) diagnostique l'anomalie de la cible de diagnostic (11), le dispositif terminal d'information (40, 40A) transmet à l'unité de traitement arithmétique (23) du dispositif de diagnostic des vibrations (20) un signal d'entrée pour empêcher l'unité de traitement arithmétique (23) de déterminer la présence/absence de l'anomalie de la cible de diagnostic (11).

2. Système de diagnostic (100, 100A) selon la revendication 1, dans lequel les données, qui sont obtenues par conversion AD du signal de vibration acquis par le capteur de vibration (21) et qui sont stockées dans une mémoire interne (24) du dispositif de diagnostic de vibration (20), sont extraites de la mémoire interne du dispositif de diagnostic de vibrations et sont utilisées avec le spectre FFT qui a subi le processus d'enveloppe dans lequel un processus de filtrage, un processus d'analyse, ou à la fois le processus de filtrage et le processus d'analyse sont modifiés.

3. Système de diagnostic (100, 100A) selon les revendications 1 ou 2, dans lequel l'unité de sortie comprend au moins une unité d'affichage d'images (45) et une unité de sortie audio (46).

4. Système de diagnostic (100, 100A) selon la revendication 3, dans lequel le système de diagnostic est configuré pour diagnostiquer la cible de diagnostic (11) fournie dans chacune d'une pluralité d'installations (15),
le système de diagnostic comprend en outre un dispositif terminal externe sur lequel est installé un logiciel de gestion,
le dispositif terminal externe est configuré pour obtenir le signal de la forme d'onde, le spectre FFT, le résultat de diagnostic de l'unité de traitement arithmétique (23) et le résultat de diagnostic de l'unité de diagnostic (43) à partir du dispositif terminal d'information (40, 40A), et
le dispositif terminal externe est également configuré pour:
gérer une tendance de changement de la vibration au fil du temps pour chacune des multiples installations (15);
afficher le spectre FFT et le signal de la forme d'onde;
afficher le résultat du diagnostic de l'unité de diagnostic (43);
afficher la présence/absence de l'anomalie déterminée par le diagnostic de l'unité de traitement arithmétique (23);
modifier le numéro d'identification du roulement (11), la vitesse de rotation de la bague intérieure (13) et le niveau de détermination des dommages du roulement de l'unité de diagnostic (43) et amener l'unité de diagnostic à effectuer un nouveau diagnostic avec le numéro d'identification modifié du roulement (11), la vitesse de rotation modifiée de la bague intérieure (13) et le niveau de détermination des dommages du roulement modifié par les opérations suivantes;
configurer un itinéraire de vérification par inspection visuelle pour diagnostiquer la pluralité d'installations (15); et
établir automatiquement un rapport sur la gestion de la tendance de variation des vibrations, le signal de forme d'onde affiché, le résultat de diagnostic affiché, la présence/absence d'anomalie affichée, le numéro d'identification du roulement, la vitesse de rotation de la bague intérieure, le niveau de détermination d'anomalie et l'itinéraire de la vérification par inspection visuelle.
